# FASCICULE DE BREVET EUROPEEN

(11) **EP 3 601 429 B1**
(45) Date de publication et mention de la délivrance du brevet: **27.11.2024**
(21) Numéro de dépôt: 18718887.5
(22) Date de dépôt: 29.03.2018
(51) Int. Cl.: C08L 1/28, C06B 21/00, C08K 5/21

(54) **FILMS D'ETHYLCELLULOSE, LEUR PRÉPARATION ET BLOCS DE PROPERGOL DOUBLE-BASE INHIBES EN COMBUSTION AVEC DE TELS FILMS**
ETHYLCELLULOSEFILME, HERSTELLUNG DAVON UND MIT SOLCHEN FILMEN VERBRENNUNGSGEHEMMTE ZWEIBASIGE TREIBMITTELBLÖCKE
ETHYL CELLULOSE FILMS, PREPARATION OF SAME AND DOUBLE-BASE PROPELLANT BLOCKS COMBUSTION-INHIBITED WITH SUCH FILMS

(30) Priorité: 30.03.2017 FR 1700346
(43) Date de publication de la demande: 05.02.2020
(73) Titulaire: Eurenco France SAS, 84700 Sorgues (FR)
(72) Inventeur: CUVELIER, Sébastien, 24520 Cours De Pile (FR); BOUTIER, Pascal, 24100 Bergerac (FR); BRU, Eric, 24520 Saint-Nexans (FR)
(74) Mandataire: Cabinet Beau de Loménie
(86) Numéro de dépôt international: PCT/FR2018/050783
(87) Numéro de publication internationale: WO 2018/178584

(56) Documents cités:
- GB-A- 632 733
- RU-C1- 2 465 257
- US-A- 2 643 611
- US-A- 3 415 963

## Description

L'invention a pour objet des films d'éthylcellulose convenant parfaitement comme films inhibiteurs de combustion de blocs de propergol double-base. Elle a également pour objet un procédé de préparation de tels films et les blocs de propergol double-base dont une partie de la surface est inhibée en combustion par de tels films.

Les propergols solides double-base ou propergols homogènes (les éléments oxydants et réducteurs étant intimement mélangés dans leur composition exempte de liant) sont connus de l'homme du métier. Ils sont composés pour l'essentiel de deux bases énergétiques, la nitrocellulose et la nitroglycérine. Leur composition renferme conventionnellement, outre lesdites deux bases énergétiques, des additifs, notamment au moins un additif de faisabilité et au moins un additif de stabilité ou stabilisant. Un tel au moins un stabilisant est présent afin de minimiser la décomposition (autocatalytique) des esters nitriques (nitroglycérine et nitrocellulose ; lesdites nitroglycérine et nitrocellulose renfermant en fait dans leur formule plusieurs fonctions esters nitriques (-RONO₂)). Il a pour fonction de capter les oxydes d'azote autocatalysants produits lors de ladite décomposition, notamment NO₂ et NO. Cette décomposition est exothermique et génère un risque d'inflammation des propergols ; elle est aussi responsable de la dégradation des propriétés mécaniques des propergols (apparition de fissurations) et de la dégradation des propriétés balistiques desdits propergols (vitesse de combustion des propergols affectée). Les stabilisants, conventionnellement présents dans la composition des propergols double-base, comportent, dans leur formule chimique, des noyaux aromatiques. Des stabilisants utilisés à ce jour sont :
- la 2-nitrodiphénylamine (2NDPA),
- la centralite I (éthyle centralite ou diéthyldiphénylurée ou 1,3-diéthyl-1,3-diphényl urée, CAS 85-98-3),
- la centralite II (méthyle centralite ou diméthyldiphényl urée ou 1,3-diméthyl-1,3-diphényl urée, CAS 611-92-7), et
- la centralite III (méthyléthyldiphénylurée, 1-méthyl-3-éthyl-1,3-diphényl urée).

De tels stabilisants sont présents, dans la composition du propergol, généralement à un taux massique de 1 à 9 %, plus généralement à un taux massique de 1 à 3 %.

La demande de brevet FR 2 494 263 (publiée en 1982) décrit des poudres propulsives double base renfermant de la centralite (centralite I) (comme stabilisant). La demande de brevet EP 0 219 431 (publiée en 1986) décrit des propergols double-base renfermant de la centralite (centralite I) ou de la 2-nitrodiphénylamine (2NDPA) (comme stabilisant).

La centralite I est le stabilisant le plus utilisé dans les propergols double-base.

Pour une parfaite maitrise de la combustion des blocs de propergol (des surfaces à bruler desdits blocs de propergol), et notamment des blocs de propergol double-base, l'homme du métier connaît l'usage qu'il est conventionnellement fait de films inhibiteurs de combustion (lesdits films inhibiteurs de combustion ne devant pas se dégrader dans le temps, par exemple se décoller de la surface des blocs de propergol (laissant alors ladite surface libre de s'enflammer) ou présenter des fissures (dans lesquelles la flamme de combustion sera susceptible de se propager)). Ont notamment été proposés à cette fin, pour des blocs de propergol double-base, des films d'éthylcellulose. On peut à ce propos se référer à l'enseignement du brevet US 2 643 611 (déposé en 1945 et publié en 1953) ; on peut tout particulièrement considérer les exemples 1 à 6 de ce document.

L'éthylcellulose est un dérivé de la cellulose (fabriqué à partir de cellulose végétale mise en milieu alcalin, l'alcali-cellulose résultante étant partiellement éthérifiée par réaction avec du chloroéthane) dans lequel certains des groupes hydroxy (-OH) des unités glucosiques ont été convertis en groupes éthoxy (-OC₂H₅). L'éthylcellulose existe ainsi selon différents types (voir lesdits différents types d'éthylcellulose précisés dans le brevet US 6 592 901), au vu du degré de substitution des groupes éthoxy (-OC₂H₅) aux groupes hydroxy (-OH) ou du taux massique de groupes éthoxy (-OC₂H₅) sur la base de la matière sèche.

Chacun des types d'éthylcellulose est par ailleurs susceptible d'exister à différentes viscosités (voir ci-après).

L'éthylcellulose est, depuis longtemps, largement utilisée dans le civil, notamment dans l'industrie alimentaire (elle est connue comme additif alimentaire sous la dénomination E462), les industries pharmaceutiques, des peintures, des colles ou encore des cosmétiques (comme agent d'encapsulation, agent d'enrobage, émulsifiant ou épaississant...).

Ladite éthylcellulose peut notamment être utilisée sous la forme de films (de tels films ont généralement une épaisseur de 0,1 mm à 0,3 mm).

Les films sont obtenus, de manière conventionnelle, à partir d'éthylcellulose dissoute dans un solvant (la documentation technique (on peut notamment se référer à la fiche technique des éthylcelluloses AQUALON^{®} commercialisées par la société Hercules Inc. (plus précisément à son tableau VII) renseigne sur la solubilité plus ou moins grande des différents types d'éthylcellulose dans les solvants), après évaporation dudit solvant. Le solvant en cause peut tout à fait consister en un mélange d'au moins deux solvants.

En référence à l'obtention et aux propriétés mécaniques desdits films, la composition de ceux-ci renferme au moins un plastifiant (le brevet US 2 322 013 (publié en 1943) décrit l'utilisation, à cette fin, du 2-acétyl citrate de triéthyle (CAS 77-89-4 ; ATEC) ; la documentation technique mentionne de nombreux plastifiants convenables (on peut notamment se référer ici aussi à la fiche technique des éthylcelluloses AQUALON^{®} commercialisées par la société Hercules Inc. Dans le tableau XIV de ce document, on trouve listés des plastifiants de différents types : esters de phosphate, esters de phtalate, autres esters, amides, huiles minérales, acides gras, alcools gras, huiles végétales et autres. On peut également se référer à l'ouvrage « Handbook of plasticizers », George Wypych Editor, Toronto - New York 2004, page 437, paragraphe 13.21.1).

En référence à la dégradation desdits films (leur aspect évoluant (opacification et coloration) et leurs propriétés mécaniques s'altérant) par exposition à la lumière et/ou à des températures proches de leur point de ramollissement (dégradation essentiellement par oxydation), la composition de ceux-ci renferme usuellement au moins un stabilisant, stabilisant de type additif absorbant les ultraviolets (par exemple la 2,4-dihydroxybenzophénone) et/ou de type agent antioxydant (résines époxy, diamyl phénol, diphényl phosphate, 2,2'-méthylènebis-(4-méthyl-6-tert-butyl phénol). Le brevet US 2 914 416 (publié en 1959) décrit de l'éthylcellulose stabilisée par un cocktail de trois types d'ingrédient (antioxydant spécifique + composé époxy spécifique + composé organique phosphite spécifique). Les films d'éthylcellulose décrits dans le brevet US 3 415 963 renferment conjointement dans leur composition du disulfure de molybdène (MoS₂) (leur conférant des propriétés d'extinction d'arcs électriques, mais diminuant leur résistance à la dégradation) et un antioxydant de type amine (palliant opportunément à cette diminution de leur résistance à la dégradation). Ils sont préconisés comme revêtement interne (« liner ») de tubes renfermant un fusible à haut ampérage. Dans ce contexte spécifique, une synergie d'action dudit disulfure de molybdène et des antioxydants de type amine est montrée.

Le savoir-faire du domaine civil a été transposé au domaine militaire et des films d'éthylcellulose analogues, renfermant les mêmes types de plastifiant et de stabilisant, ont été utilisés comme films inhibiteurs de combustion de blocs de propergol double-base. A ce propos, pour ce qui concerne plus particulièrement les stabilisants, on peut se reporter :
- à la spécification militaire (pour produits fabriqués en série) MIL-T-18833 (Nord) (du 30 juin 1955) qui mentionne expressément l'utilisation, à titre de stabilisant, du diamyl phénol 110 (fabriqué par la société Sharples Chemical) et du A-5 (résine époxy) (fabriqué par la société Carbide and Carbon) ;
- à la spécification militaire (pour produits fabriqués en série) MIL-P-63462 (AR) (du 10 septembre 1979) qui mentionne expressément l'utilisation, à titre de stabilisant d'un film d'éthylcellulose de type K70, de la résine époxy ERL-2774 (fabriquée par la société Union Carbide) ; ledit film pouvant contenir jusqu'à 2,2 parties en poids de ladite résine pour 100 parties en poids d'éthylcellulose.

Les stabilisants, présents dans les films d'éthylcellulose utilisés comme films inhibiteurs de combustion de propergols double-base, ceux identifiés ci-dessus et plus généralement ceux utilisés jusqu'à ce jour en référence aux stipulations militaires, ont donc été calqués et sont à ce jour toujours calqués (à la connaissance des inventeurs) sur ceux utilisés dans le civil, notamment au sein des films d'éthylcellulose utilisés dans les domaines pharmaceutique et alimentaire. Ces stabilisants ne sont donc en rien spécifiques à leur contexte spécifique d'utilisation.

Dans ce contexte spécifique d'utilisation, il a toutefois été décrit 1) que la solubilité des films d'éthylcellulose dans la nitroglycérine assurait une bonne liaison chimique entre ces films et le propergol mais 2) qu'il en résultait une migration inéluctable de la nitroglycérine du propergol dans le film, cette migration rendant, au fur et à mesure du vieillissement du propergol, le film combustible (sur une épaisseur de plus en plus importante) et diminuant donc ses performances d'inhibiteur de combustion (« The interactions of cellulose acetate and ethyl cellulose inhibitors with double-base propellant » par R. Stenson, dans NTIS, AD-752 371, Technical Note N° 48, November 1971 (Annual meeting of the Institut für Chemie der Treib- und Explosivstoffe, Karlsruhe, September 1971) ; et « Nitroglycerine Migration in Ethylcellulose », par M. H. Kaufman, dans J. Chem. Eng. Data, 1962, 7 (3), pp 426-428). En référence à ce problème technique identifié depuis de nombreuses années - celui donc de la migration de la nitroglycérine du propergol vers les films inhibiteurs de combustion, tenu pour seul responsable de la diminution, avec le temps, de l'efficacité desdits films - il n'a jamais été proposé de solution pragmatique à l'échelle industrielle.

Plus récemment, on a identifié de réels problèmes de fonctionnement de munitions ayant été stockées un certain temps (vieillies) dans des conditions de température non contrôlées.

Certes, préalablement aux deux spécifications militaires MIL rappelées ci-dessus, l'art antérieur avait déjà décrit l'incorporation, dans des films d'éthylcellulose, de stabilisants, conventionnellement présents dans la composition des propergols double-base. Ainsi le brevet GB 632,733 (publié en 1949) décrit un procédé pour revêtir des blocs de propergol double-base avec des films inhibiteurs. Il illustre, en son exemple 3, des compositions de films d'éthylcellulose contenant, respectivement, exprimées en parties en poids :
- 65 parties d'éthylcellulose, 33 parties de phtalate de diéthyle (plastifiant) et 2 parties de centralite I (stabilisant), et
- 60 parties d'éthylcellulose, 38 parties de plastifiant (phtalate de diéthyle) et 2 parties de centralite I (stabilisant).

De telles compositions contiennent un fort taux de plastifiant et, de façon corollaire, un moindre taux d'éthylcellulose. Elles servent de compositions tests pour évaluer des techniques d'enrubannage. Elles ne conviennent pas, de façon opérationnelle, comme films inhibiteurs. En effet, un taux de plastifiant aussi élevé implique une dégradation progressive dans le temps des propriétés de combustion du film et de la tenue en vieillissement dudit film au contact du bloc de propergol double base.

Le brevet RU 2 465 257 (publié en octobre 2012) décrit par ailleurs des compositions, contenant de l'éthylcellulose (en lieu et place d'acétylcellulose), un plastifiant (phtalate de dibutyle) et un mélange synergétique de trois stabilisants (N-méthyl-p-nitroaniline + diphénylamine + 2-nitrophénylamine), pour l'obtention d'objets, tels des étuis de chargement pyrotechnique, par des procédés de plasturgie (moulage-extrusion). Lesdits objets sont obtenus par mélange, en voie sèche, des ingrédients constitutifs desdites compositions.

Selon son premier objet, la présente invention concerne donc un film d'éthylcellulose convenant parfaitement comme film inhibiteur de combustion de blocs de propergol double-base. Ledit film est un film d'éthylcellulose (des informations non limitatives sont à ce propos fournies ci-après), dont la composition renferme, outre de l'éthylcellulose (consistant en un mélange constitué de 40 à 60 % en masse d'éthylcellulose de type K50 et de 60 à 40 % en masse d'éthylcellulose de type K100), au moins un plastifiant (des informations non limitatives sont à ce propos fournies ci-après) et au moins un stabilisant. En cela, ledit film pourrait être assimilé à un film de ce type connu de l'art antérieur (voir ci-dessus).

Dans la composition du film de l'invention - composition originale (renfermant au moins 75 % en masse d'éthylcellulose et au maximum 20 % en masse de plastifiant(s)), telle que précisée ci-après -, le au moins un stabilisant comprend, de façon caractéristique, au moins un composé spécifique (dont la nature exacte est précisée ci-après), dont la formule chimique comporte des noyaux aromatiques (deux), apte à fixer (chimiquement) les oxydes d'azote de décomposition d'esters nitriques. De par la présence de ce composé spécifique (apte à stabiliser les propergols double-base *per se*)*,* la dégradation du film mis au contact d'un propergol double-base s'est révélée limitée.

Ledit au moins un composé est présent à raison de 0,5 à 5 % en masse de la masse du film (sec). Il est avantageusement présent à raison de 1 à 3 % en masse de la masse du film sec, il est très avantageusement présent à raison de 1,5 à 2,5 % en masse de la masse du film sec.

La présence d'un tel au moins un composé - stabilisant du type précisé ci-dessus - ne saurait exclure la possible coprésence d'un stabilisant d'un autre type, par exemple de type antioxydant.

On note incidemment qu'un unique tel composé est généralement présent mais que la présence conjointe d'au moins deux tels composés fait partie intégrante de la présente invention.

A toutes fins utiles, on peut d'ores et déjà indiquer ici que la composition massique des films (secs) de l'invention renferme généralement, pour au moins 95 %, l'éthylcellulose, le au moins au plastifiant et le au moins un composé. Ladite composition est susceptible de renfermer, en sus, jusqu'à 5 % en masse d'au moins un additif. Lorsqu'il est présent, ledit au moins un additif l'est généralement (en référence à son efficacité) à raison d'au moins 0,1 % en masse. On comprend bien évidemment que, dans le contexte de l'invention, un tel au moins un additif ne saurait comprendre, ou consister en, du disulfure de molybdène. Un tel au moins un additif peut notamment être choisi parmi les agents antiadhésifs (dont la présence est opportune pour faciliter le décollement du film après évaporation du solvant, agent antiadhésif de type silicone, par exemple), les anti-lueurs, les antioxydants (stabilisants « conventionnels »), les colorants, les tensio-actifs, les agents anti-agglomération, les agents hydrophobes,... La composition des films de l'invention renferme avantageusement au moins un tel agent antiadhésif. Ledit au moins un agent antiadhésif est généralement présent à raison de 0,1 à 0,5 % en masse (dans la composition dudit film).

Pour ce qui concerne le au moins un composé, dont la formule chimique comporte des(deux) noyaux aromatiques, apte à fixer les oxydes d'azote de décomposition d'esters nitriques, il consiste donc avantageusement en au moins un tel composé utilisé, selon l'art antérieur, pour la stabilisation des propergols double-base *per se.* Sa formule chimique comporte deux noyaux aromatiques. Il consiste en :
- la 2-nitrodiphénylamine (2NDPA),
- la 1,3-diéthyl-1,3-diphényl urée (centralite I),
- la 1,3-diméthyl-1,3-diphényl urée (centralite II),
- la 1-méthyl-3-éthyl-1,3-diphényl urée (centralite III), ou
- en un mélange d'au moins deux desdits composés.

Les films d'éthylcellulose de l'invention renferment très avantageusement, en référence à leur utilisation comme films inhibiteurs de combustion de blocs de propergol double-base, de la 1,3-diéthyl-1,3-diphényl urée (centralite I), à titre de stabilisant.

En référence au substrat de base des films de l'invention, à savoir l'éthylcellulose, on peut ajouter ce qui suit. De manière tout à fait originale, l'éthylcellulose en cause consiste en un mélange constitué de 40 à 60 % en masse d'éthylcellulose de type K50 et de 60 à 40 % en masse d'éthylcellulose de type K100 (K50 (40-60 %) / K100 (60-40 %) (% en masse)). Elle consiste opportunément en un tel mélange, constitué de 50 % en masse d'éthylcellulose de type K50 et de 50 % en masse d'éthylcellulose de type K100 (K50 (50%) / K100 (50 %) (% en masse)). On peut abusivement qualifier l'éthylcellulose correspondante d'éthylcellulose de type dit « K75 ». Il est en fait du mérite des inventeurs d'avoir cherché une alternative performante à l'éthylcellulose de type K70. Il est de leur mérite de proposer un nouveau type d'éthylcellulose, mélange d'éthylcellulose de type K50 (présentant une meilleure solubilité dans les solvants que l'éthylcellulose de type K70) et d'éthylcellulose de type K100 (qui procure de meilleures propriétés mécaniques au film sec que l'éthylcellulose de type K70), et d'avoir mis en évidence l'intérêt à l'utiliser comme matière première, tout particulièrement en référence aux propriétés mécaniques des films préparés. L'éthylcellulose de type « K75 » (K50 (50 %) / K100 (50 %) (% en masse)) constitue une alternative avantageuse à l'éthylcellulose de type K70. Plus généralement, ladite éthylcellulose et ses homologues (K50 (40-60 %) / K100 (60-40 %) (% en masse)) constituent une alternative avantageuse à l'éthylcellulose de type K70. Elles sont quasi équivalentes en terme de « processabilité » (à teneur massique identique dans le solvant double du type éther diéthylique (ou éther éthylique) / éthanol (2/3 / 1/3 (en rapport massique)), un mélange après malaxage contenant de l'éthylcellulose de type dit « K75 » (destiné à être coulé) a une viscosité proche d'un mélange contenant de l'éthylcellulose de type K70) et plus intéressantes en référence aux propriétés mécaniques (tout particulièrement) des films préparés. De préférence, l'éthylcellulose en cause est donc de type dit « K75 ».

Des éthylcelluloses des types K50 et K100 sont commercialement disponibles (voir la documentation technique DOW (Dow Cellulosics), « ETHOCEL, Ethylcellulose polymers, Technical Handbook ») sous la nomenclature Ethocel Med. 50, 100. Des éthylcelluloses de type K100 sont aussi commercialisées sous la marque Aqualon^{®} par la société Hercules Inc.

Le pourcentage (en masse) d'éthylcellulose dans le film (sec) est avantageusement compris entre 75 % et 95 %, avantageusement entre 80 % et 90 %.

Le au moins un plastifiant présent (un ou au moins deux) dans la composition des films d'éthylcellulose de l'invention peut notamment être choisi parmi les plastifiants conventionnellement utilisés dans la composition des films d'éthylcellulose de l'art antérieur (voir ci-dessus). Avantageusement, il est choisi parmi ceux identifiés ci-après : le 2-acétyl citrate de triéthyle (CAS 77-89-4 ; ATEC), l'adipate de dioctyle (CAS 123-79-5 ; DOA), le sébacate de dibutyle (CAS 109-43-3 ; DBS), le sébacate d'isopropyle (CAS 749-02-3 ; DIS), le ricinoléate de n-butyle (CAS 151-13-3 ; notamment commercialisé par la société Vertellus LLC sous la dénomination Floralyn^{®} P3), le rosinate de méthyle hydrogéné ou ester méthylique de colophane hydrogénée (CAS 8050-15-5 ; notamment commercialisée par la société Eastman Chemical sous la dénomination Floralyn^{®} 5020 F), le dicaprylate/dicaprate de triéthylèneglycol (CAS 68583-52-8 ; notamment commercialisé par la société Stearinerie Dubois sous la dénomination DUB 810 TEG), l'huile de castor oxydée (CAS 68187-84-8 ; notamment commercialisée par la société Vertellus LLC sous la dénomination Pale n°16). Très avantageusement, il est choisi parmi le 2-acétyl citrate de triéthyle (ATEC), le sébacate de dibutyle (DBS) et ledit dicaprylate/dicaprate de triéthylèneglycol. De préférence, le plastifiant présent est le 2-acétyl citrate de triéthyle (ATEC).

Le au moins un plastifiant entre dans la composition (massique) du film (sec) à hauteur de 4 % à 20 %, avantageusement de 8 % à 15 %.

On note aussi incidemment qu'un unique plastifiant est généralement présent mais que la présence conjointe d'au moins deux tels plastifiants fait partie intégrante de la présente invention.

Au vu des propos ci-dessus, on a compris que la composition des films d'éthylcellulose selon l'invention, exprimée en pourcentages massiques, renferme :
- de 75 % à 95 % (avantageusement de 80 % à 90 %) d'éthylcellulose telle que définie ci-dessus,
- de 4 % à 20 % (avantageusement de 8 % à 15 %) d'au moins un plastifiant,
- de 0,5 % à 5 % (avantageusement de 1 % à 3 %, très avantageusement de 1,5% à 2,5 %) d'au moins un composé, dont la formule chimique comporte des noyaux aromatiques, apte à fixer les oxydes d'azote de décomposition d'esters nitriques (d'au moins un composé spécifique tel qu'identifié ci-dessus : la 2-nitrodiphénylamine (2NDPA), la 1,3-diéthyl-1,3-diphényl urée (centralite I), la 1,3-diméthyl-1,3-diphényl urée (centralite II), la 1-méthyl-3-éthyl-1,3-diphényl urée (centralite III), ou un mélange d'au moins deux desdits composés), et
- éventuellement, jusqu'à 5 % d'au moins un additif.

Les gammes avantageuses (et très avantageuses) indiquées ci-dessus s'entendent indépendamment l'une de l'autre et, de façon préférée, en combinaison les unes avec les autres. Ainsi, la composition des films d'éthylcellulose selon l'invention, exprimée en pourcentages massiques, renferme avantageusement :
- de 80 % à 90 % d'éthylcellulose,
- de 8 % à 15 %, d'au moins un plastifiant,
- de 1 % à 3 %, très avantageusement de 1,5% à 2,5 %, d'au moins un composé choisi parmi la 2-nitrodiphénylamine (2NDPA), la 1,3-diéthyl-1,3-diphényl urée (centralite I), la 1,3-diméthyl-1,3-diphényl urée (centralite II), la 1-méthyl-3-éthyl-1,3-diphényl urée (centralite III), ou un mélange d'au moins deux desdits composés, et
- éventuellement, jusqu'à 5 % d'au moins un additif.

On rappelle, à toutes fins utiles, que la composition massique des films (secs) de l'invention renferme généralement, pour au moins 95 %, l'éthylcellulose, le au moins au plastifiant et le au moins un composé. Elle peut tout à fait renfermer l'éthylcellulose, le au moins au plastifiant et le au moins un composé pour au moins 98 % en masse, pour au moins 99 % en masse, voire pour au moins 99,5 % en masse, voire même pour 99,9 % en masse. On a vu ci-dessus que ladite composition est susceptible de renfermer au moins un additif, qu'elle renferme avantageusement (au titre d'au moins un tel additif) au moins un agent antiadhésif, ledit au moins un agent antiadhésif étant généralement présent à raison de 0,1 à 0,5 % en masse.

Pour ce qui concerne chacun des constituants (éthylcellulose, (au moins un) plastifiant, (au moins un) composé (stabilisant), et éventuellement (au moins un) additif), on renvoie à ce qui a été précisé, de façon nullement limitative, ci-dessus.

De façon nullement limitative, on peut indiquer ici que les films d'éthylcellulose selon l'invention présentent généralement une épaisseur de 0,1 à 0,3 mm. En cela, ils constituent des films d'éthylcellulose du type de ceux de l'art antérieur.

Les films d'éthylcellulose selon l'invention peuvent par ailleurs être obtenus de façon conventionnelle (voir ci-dessus).

On préconise, avantageusement, pour leur préparation, un procédé qui comprend :
- la préparation d'un mélange renfermant les ingrédients constitutifs dudit film, en des proportions adéquates (au vu de la composition visée pour ledit film), dans un solvant,
- la mise en forme dudit mélange, suivie de
- l'évaporation dudit solvant ;
ledit solvant étant un solvant double du type acétone / éthanol ou du type éther diéthylique / éthanol, préférentiellement du type éther diéthylique / éthanol, les deux composants dudit solvant double étant présents en les rapports massiques ci-après : 55-70 % / 45-30 %.

Ledit solvant double est, de façon particulièrement préférée, du type éther diéthylique (pour 2/3 (~ 66 %) en masse) / éthanol (pour 1/3 (~ 33 %) en masse))

Le mélange est obtenu par malaxage. Sa teneur en matières sèches (extrait sec) est opportunément de 15 à 25 % en masse. Elle est généralement de 18 à 20 % en masse.

La mise en forme comprend généralement la coulée, au travers d'une filière plate, sur un ruban en métal (cuivre, par exemple) mis en translation (généralement mis en déroulement en boucle fermée). Il n'est pas exclu de translater la filière pour un dépôt sur un ruban immobile.

Les films déposés sont ensuite séchés, par exemple à température ambiante, pour élimination du solvant double (plus généralement du solvant).

On comprend que la viscosité du mélange est opportunément ajustée pour assurer la coulabilité dudit mélange, et que le taux de solvant est toutefois opportunément minimisé afin de limiter la durée de séchage (d'évaporation dudit solvant).

Pour la préparation du mélange : ingrédients constitutifs du film / solvant (= solvant double du type préféré : éther diéthylique / éthanol en le ratio massique indiqué (55-70 % / 30-45 %), on préconise vivement de procéder en trois étapes :
- une première étape de dissolution, avec malaxage, des ingrédients constitutifs du film, à l'exception du au moins un plastifiant, dans une partie de l'éther diéthylique, qui correspond avantageusement à la moitié de la quantité totale dudit éther diéthylique,
- l'addition, avec malaxage, au mélange constitué d'une partie de l'éthanol, qui correspond avantageusement à la moitié de la quantité totale dudit éthanol,
- l'addition, avec malaxage, au mélange obtenu du plastifiant et des parties complémentaires desdits éther diéthylique et éthanol ; avantageusement, après l'addition du plastifiant, l'addition de la partie complémentaire de l'éthanol entre l'addition de deux quantités d'éther diéthylique, dont la somme constitue la partie complémentaire dudit éther diéthylique (très avantageusement de la moitié complémentaire de l'éthanol entre deux quarts de la moitié complémentaire de l'éther diéthylique).

Cette façon de procéder est particulièrement avantageuse au regard de la durée nécessaire à l'obtention d'un mélange homogène avec une viscosité adaptée.

Selon son dernier objet, la présente invention concerne des blocs de propergol double-base (NC/NG) dont une partie de la surface est recouverte d'un film inhibiteur de combustion. De façon conventionnelle, cette partie de la surface recouverte dudit film est ainsi préservée de la combustion, lors de la combustion des blocs de propergol. De façon caractéristique, ledit film inhibiteur de combustion est un film d'éthylcellulose tel que décrit ci-dessus (film d'éthylcellulose qui constitue le premier objet de la présente invention) et/ou tel que préparé par le procédé décrit ci-dessus (procédé qui constitue le deuxième objet de la présente invention).

Lesdits blocs de propergol sont obtenus de façon conventionnelle à partir de blocs de propergol double base, d'une part et de films selon l'invention, d'autre part. Le recouvrement par un tel film de la partie de la surface d'un tel bloc à inhiber en combustion peut ainsi être mis en oeuvre par enrubannage ou par spiralage, en présence d'un solvant double de collage du type lactate d'éthyle/acétate de butyle, par exemple selon la spécification militaire MIL-P-18811B (du 19 octobre 1990).

De façon avantageuse, les compositions du propergol double-base constitutif du bloc et du film inhibiteur de combustion (recouvrant une partie de la surface dudit bloc) renferment un(des (= au moins deux)) composé(s) identique(s) choisi(s) parmi la 2-nitrodiphénylamine (2NDPA), la 1,3-diéthyl-1,3-diphényl urée (centralite I), la 1,3-diméthyl-1,3-diphényl urée (centralite II) et la 1-méthyl-3-éthyl-1,3-diphényl urée (centralite III) (= le même composé ou les mêmes composés (de la liste indiquée)). Ainsi, on trouve avantageusement, dans les compositions du propergol double-base constitutif du bloc et du film inhibiteur de combustion, de la centralite I.

On se propose maintenant d'illustrer l'invention.

Les exemples 1 à 5 ci-après illustrent, de façon nullement limitative, des compositions (exprimées en pourcentages (%) massiques) de films d'éthylcellulose selon l'invention, lesdits films convenant parfaitement comme films inhibiteurs de combustion de blocs de propergol double-base. Lesdites compositions renferment, en sus de l'éthylcellulose (dont le type est précisé), un plastifiant conventionnel (ATEC, dicaprylate/dicaprate de triéthylèneglycol (CAS 68583-52-8) ou DBS), un stabilisant (au sens de l'invention : centralite I) et un additif conventionnel (de la silicone, à titre d'agent antiadhésif).

### Exemple 1 (référence) :

| Composant | | % massique |
|---|---|---|
| Ethylcellulose | type N100⁽¹⁾ | 84 |
| Plastifiant | ATEC⁽²⁾ | 14 |
| Stabilisant | centralite I⁽³⁾ | 1,8 |
| Antiadhésif | silicone⁽⁴⁾ | 0,2 |

### Exemple 2 (référence) :

| Composant | | % massique |
|---|---|---|
| Ethylcellulose | type N100⁽¹⁾ | 88 |
| Plastifiant | ATEC⁽²⁾ | 10 |
| Stabilisant | centralite I⁽³⁾ | 1,8 |
| Antiadhésif | silicone⁽⁴⁾ | 0,2 |

### Exemple 3 (référence) :

| Composant | | % massique |
|---|---|---|
| Ethylcellulose | type N100⁽¹⁾ | 88 |
| Plastifiant | dicaprylate/dicaprate de triéthylèneglycol^{(2')} | 10 |
| Stabilisant | centralite I⁽³⁾ | 1,8 |
| Antiadhésif | silicone⁽⁴⁾ | 0,2 |

### Exemple 4 :

| Composant | | % massique |
|---|---|---|
| Ethylcellulose | type « K75 »^{(1')} | 84 |
| Plastifiant | ATEC⁽²⁾ | 14 |
| Stabilisant | centralite I⁽³⁾ | 1,8 |
| Antiadhésif | silicone⁽⁴⁾ | 0,2 |

### Exemple 5 :

| Composant | | % massique |
|---|---|---|
| Ethylcellulose | type « K75 »^{(1')} | 88 |
| Plastifiant | DBS^{(2")} | 10 |
| Stabilisant | centralite I⁽³⁾ | 1,8 |
| Antiadhésif | silicone⁽⁴⁾ | 0,2 |

| | | |
|---|---|---|
| ⁽¹⁾ du type éthylcellulose AQUALON^{®} commercialisée par la société Hercules Inc. ^{(1')} mélange (50/50 (en masse) (50 % / 50 % (% en masse)) de polymères du type ETHOCEL^{®}de-type K50 et de type K100 commercialisés par la société Dow Chemical ⁽²⁾ commercialisé sous la dénomination Citroflex^{®} A-2 par la société Vertellus LLC (2') commercialisé sous la dénomination DUB 810 TEG par la société Stearinerie-Dubois Fils ^{(2")} commercialisé sous la dénomination DUB Green DBS par la société Stearinerie-Dubois Fils ⁽³⁾ fourni par la société SNPE ⁽⁴⁾ PDMS (polydiméthylsiloxane) fourni par la société SNPE. | | |

A partir de leurs ingrédients constitutifs, identifiés ci-dessus, utilisés dans les proportions identifiées ci-dessus, des films ont été préparés de façon conventionnelle. Après malaxage desdits ingrédients constitutifs dans un solvant double du type éther diéthylique / éthanol (pour une série d'essais dans le rapport massique 3/5 (60 %) / 2/5 (40 %) et pour une autre série d'essais dans le rapport massique 2/3 (~ 66 %) / 1/3 (~ 33 %)), les mélanges obtenus ont été coulés, au travers d'une filière plate, sur un ruban en cuivre de 27 m (mis en déroulement en boucle fermée). Les films ainsi déposés ont ensuite été séchés à température ambiante. A l'issue du séchage, ils présentaient une épaisseur moyenne d'une valeur comprise entre 0,16 et 0,19 mm.

D'autres films ont été préparés à partir de leurs ingrédients constitutifs, identifiés ci-dessus, utilisés dans les proportions indiquées ci-dessus.

Le mélange desdits ingrédients et du solvant double du type éther diéthylique / éthanol (2/3 (~ 66 %) / 1/3 (~ 33 %) (% en masse)) a été mis en oeuvre selon la méthode avantageuse préconisée. Plus précisément, les trois étapes successives ci-après ont été mises en oeuvre :
- une première étape de malaxage pour l'obtention d'un mélange 1 comprenant les ingrédients constitutifs du film excepté le plastifiant, avec la moitié de la quantité totale d'éther diéthylique,
- une deuxième étape de malaxage pour l'obtention d'un mélange 1', après introduction complémentaire, dans le mélange 1, de la moitié de la quantité totale d'éthanol, et
- une troisième étape de malaxage pour l'obtention d'un mélange 1", après introduction du plastifiant et de la quantité complémentaire pour obtenir la quantité totale des deux solvants. Cette quantité complémentaire de solvant double a été apportée (conformément à la variante préférée) dans l'ordre suivant : pour moitié d'éther diéthylique à ajouter, puis la totalité de l'éthanol à ajouter, puis la moitié d'éther diéthylique à ajouter.

Le tableau 1 ci-après illustre la préparation du mélange (renfermant 18 % en masse de matières sèches), par malaxage, pour la composition de l'exemple 4 ci-dessus.

**Tableau 1**

| | Ingrédients | |
|---|---|---|
| | nature | % massique |
| Mélange 1 | Ethylcellulose | 15,05 |
| | Stabilisant | 0,33 |
| | Antiadhésif | 0,05 |
| | Ether | 27,32 |

| Mélanger | | |
|---|---|---|
| Mélange 1' | Ethanol | 13,67 |

| Mélanger | | |
|---|---|---|
| Mélange 1" | Plastifiant | 2,57 |
| | Ether | 13,67 |
| | Ethanol | 13,67 |
| | Ether | 13,67 |
| Total | | 100,00 |

En opérant ainsi, l'obtention des mélanges finaux (1") a été plus rapide.

Après malaxage desdits ingrédients constitutifs dans le solvant double, les mélanges obtenus ont été coulés, au travers d'une filière plate, sur un ruban en cuivre de 27 m (mis en déroulement en boucle fermée). Les films ainsi déposés ont ensuite été séchés à température ambiante. A l'issue du séchage, ils présentaient une épaisseur moyenne d'une valeur comprise entre 0,16 et 0,19 mm.

A propos de l'exemple 4 (faisant usage d'éthylcellulose de type dit «K75»), on peut préciser ce qui suit.

La viscosité Brookfield (selon la norme NF EN ISO 2555) du mélange, obtenu après malaxage de la composition (dudit l'exemple 4), présentant 18 % en masse d'extrait sec, dans le solvant double éther diéthylique / éthanol (2/3 (~ 66 %) / 1/3 (~ 33 %) (% en masse)) est d'environ 8200 cP (8,2 Pa.s).

L'élongation à la contrainte de rupture du film sec obtenu est d'environ 36 % pour une contrainte de rupture d'environ 24 MPa, parfaitement adaptée aux contraintes engendrées par les procédés (enrubannage, spiralage) de mise en place du film sur un bloc de propergol. En comparaison, l'élongation à la contrainte de rupture mesurée sur un film comparable à base d'éthylcellulose de type K70 selon la spécification MIL-P-63462 est d'environ 26 % pour une contrainte de rupture d'environ 20 MPa.

La compatibilité chimique entre les matériaux constitutifs des films selon l'invention et ceux d'un propergol double-base (« French solventless propellant (S. D. propellants) ») a été appréciée en mettant en oeuvre l'épreuve sous vide GEMO CMP-200-00. La composition, (exprimée en pourcentages (%) massiques), dudit propergol double-base était la suivante : nitrocellulose 66 %, nitroglycérine 25 %, centralite I 8 % et divers 1 %.

Les inventeurs ont en fait évalué la stabilité chimique d'une quantité définie de matière contenant un mélange 50 / 50 (% massique) des deux matériaux (celui constitutif du film / celui constitutif du propergol) à l'état de poudres, par calcul du volume de gaz libéré, lors d'un chauffage sous vide, à température donnée (80°C) pendant une durée donnée (200 heures). Ledit volume de gaz a été calculé à partir de la valeur de la pression mesurée par un capteur.

Les résultats de ces mesures de stabilité (chimique) de mélanges 50 / 50 (% massique) du matériau constitutif des films selon l'invention présentant la composition des exemples 1 à 5 ci-dessus et du matériau constitutif du propergol double base présentant la composition indiquée ci-dessus sont donnés dans le tableau 2 ci-après.

On indique ici, à toutes fins utiles, que, conventionnellement, il est exigé des quantités de gaz dégagées par gramme de mélange inférieures à 100 cm³ / 100 g, pour des mélanges (matériaux constitutifs du film/matériaux constitutifs du propergol) 10 / 90 (% massiques).

**Tableau 2**

| (compatibilité chimique entre le propergol double base et des films de l'invention) | |
|---|---|
| Film | Résultat du test d'épreuve sous vide (50 / 50) (cm³/ 100 g) |
| Exemple 4 | 0 |
| Exemple 5 | 0 |
| Exemple 1 | 80 à 90 |
| Exemple 2 | 70 à 90 |
| Exemple 3 | 70 à 80 |

Les films présentant la composition des exemples 4 et 5 selon l'invention, à base de d'éthylcellulose de type « K75 », sont ceux donnant les résultats de stabilité (de compatibilité) les plus favorables (en effet, il n'y a aucune production de gaz).

Les films présentant la composition des exemples 1 à 3 selon l'invention, à base de d'éthylcellulose de type N100, donnent des résultats moins satisfaisants mais tout à fait acceptables.

Les résultats obtenus à l'épreuve sous vide (quantités de gaz dégagées < 100 cm³/100 g (voir le tableau 1 ci-dessus)) avec le matériau constitutif des films selon l'invention, dans une condition de mélange (50 / 50) plus défavorable que celle (10 / 50 : voir ci-dessus) retenue conventionnellement, montrent donc le grand intérêt des films de l'invention, en termes de compatibilité avec un propergol double-base.

## Revendications

1. Film d'éthylcellulose, dont la composition, exprimée en pourcentages massiques, renferme :
- de 75 % à 95 % d'éthylcellulose consistant en un mélange constitué de 40 à 60 % en masse d'éthylcellulose de type K50 et de 60 à 40 % en masse d'éthylcellulose de type K100 ;
- de 4 % à 20 % d'au moins un plastifiant ;
- de 0,5 % à 5 % d'au moins un composé choisi parmi :
+ la 2-nitrodiphénylamine,
+ la 1,3-diéthyl-1,3-diphényl urée,
+ la 1,3-diméthyl-1,3-diphényl urée, et
+ la 1-méthyl-3-éthyl-1,3-diphényl urée ; et
- éventuellement, jusqu'à 5 % d'au moins un additif.

2. Film d'éthylcellulose selon la revendication 1, **caractérisé en ce que** ledit au moins un plastifiant est choisi parmi :
- le 2-acétyl citrate de triéthyle,
- l'adipate de dioctyle,
- le sébacate de dibutyle,
- le sébaçate d'isopropyle,
- le ricinoléate de n-butyle,
- le rosinate de méthyle hydrogéné : CAS 8050-15-5
- le dicaprylate/dicaprate de triéthylèneglycol : CAS 68583-52-8,
- l'huile de castor oxydée : CAS 68187-84-8.

3. Film d'éthylcellulose selon la revendication 2, **caractérisé en ce que** ledit au moins plastifiant est choisi parmi le 2-acétyl citrate de triéthyle, le sébacate de dibutyle et le dicaprylate/dicaprate de triéthylèneglycol.

4. Film d'éthylcellulose selon la revendication 2, **caractérisé en ce que** ledit au moins plastifiant est le 2-acétyl citrate de triéthyle.

5. Film d'éthylcellulose selon l'une quelconque des revendications 1 à 4, **caractérisé en ce que** l'éthylcellulose, ledit au moins un plastifiant et ledit au moins un composé représentent au moins 95 % en masse de ladite composition ; l'éventuel complément à 100 % consistant en au moins un additif.

6. Film d'éthylcellulose selon l'une quelconque des revendications 1 à 5, **caractérisé en ce que** sa composition, exprimée en pourcentages massiques, renferme :
- de 80 % à 90 % de ladite éthylcellulose,
- de 8 % à 15 % dudit au moins un plastifiant,
- de 1 % à 3 %, très avantageusement de 1,5 % à 2,5 %, dudit au moins un composé, et
- éventuellement, jusqu'à 5 % d'au moins un additif.

7. Film d'éthylcellulose selon l'une quelconque des revendications 1 à 6, **caractérisé en ce que** sa composition renferme au moins un agent antiadhésif ; ledit au moins un agent antiadhésif étant généralement présent à un taux massique de 0,1 à 0,5%.

8. Procédé de préparation d'un film d'éthylcellulose selon l'une quelconque des revendications 1 à 7, **caractérisé en ce qu'**il comprend :
- la préparation d'un mélange renfermant les ingrédients constitutifs dudit film, en des proportions adéquates, dans un solvant,
- la mise en forme dudit mélange, suivie de
- l'évaporation dudit solvant,
**caractérisé en ce que** ledit solvant est un solvant double du type acétone / éthanol ou du type éther diéthylique / éthanol, préférentiellement du type éther diéthylique / éthanol, les deux composants dudit solvant double étant présents en les rapports massiques ci-après : 55-70 % / 45-30 %.

9. Procédé selon la revendication 8, **caractérisé en ce que** ledit solvant double est du type éther diéthylique/éthanol et **en ce que** ledit mélange est préparé en trois étapes successives :
- une première étape de dissolution, avec malaxage, des ingrédients constitutifs du film, à l'exception du au moins un plastifiant, dans une partie de l'éther diéthylique, qui correspond avantageusement à la moitié de la quantité totale dudit éther diéthylique,
- l'addition, avec malaxage, au mélange constitué d'une partie de l'éthanol, qui correspond avantageusement à la moitié de la quantité totale dudit éthanol,
- l'addition, avec malaxage, au mélange obtenu du plastifiant et des parties complémentaires desdits éther diéthylique et éthanol ; avantageusement, après l'addition du plastifiant, l'addition de la partie complémentaire de l'éthanol, entre l'addition de deux quantités d'éther diéthylique, dont la somme constitue la partie complémentaire dudit éther diéthylique.

10. Bloc de propergol double-base, dont une partie de la surface est recouverte d'un film inhibiteur de combustion, caractérisé en que ledit film inhibiteur de combustion est un film d'éthylcellulose selon l'une quelconque des revendications 1 à 7 et/ou un film d'éthylcellulose préparé selon la revendication 8 ou 9.

11. Bloc de propergol double-base selon la revendication 10, **caractérisé en ce que** les compositions du propergol double-base constitutif dudit bloc et dudit film inhibiteur de combustion renferment un ou au moins deux composés identiques choisis parmi la 2-nitrodiphénylamine, la 1,3-diéthyl-1,3-diphényl urée, la 1,3-diméthyl-1,3-diphényl urée, la 1-méthyl-3-éthyl-1,3-diphényl urée.

## Patentansprüche

1. Ethylcellulosefolie, deren Zusammensetzung, ausgedrückt in Gewichtsprozent, enthält:
- 75 % bis 95 % Ethylcellulose, bestehend aus einer Mischung, die aus 40 bis 60 Gew.-% Ethylcellulose vom Typ K50 und 60 bis 40 Gew.-% Ethylcellulose vom Typ K100;
- 4 % bis 20 % mindestens eines Weichmachers;
- 0,5 % bis 5 % mindestens einer Verbindung, ausgewählt aus:
+ 2-Nitrodiphenylamin,
+ 1,3-Diethyl-1,3-diphenylharnstoff,
+ 1,3-Dimethyl-1,3-diphenylharnstoff, und
+ 1-Methyl-3-ethyl-1,3-diphenylharnstoff; und
- gegebenenfalls bis zu 5 % mindestens eines Zusatzstoffes.

2. Ethylcellulosefolie nach Anspruch 1, **dadurch gekennzeichnet, dass** der mindestens eine Weichmacher ausgewählt ist aus:
- Triethyl-2-acetylcitrat,
- Dioctyladipat,
- Dibutylsebacat,
- Isopropylsebacat,
- n-Butylricinoleat,
- hydriertes Methyl-Rosinat: CAS 8050-15-5
- Triethylenglykol-Dicaprylat/Dicaprat: CAS 68583-52-8,
- oxidiertes Biberöl: CAS 68187-84-8.

3. Ethylcellulosefolie nach Anspruch 2, **dadurch gekennzeichnet, dass** der mindestens eine Weichmacher ausgewählt ist aus Triethyl-2-acetylcitrat, Dibutylsebacat und Triethylenglycoldicaprylat/-dicaprat.

4. Ethylcellulosefolie nach Anspruch 2, **dadurch gekennzeichnet, dass** der mindestens eine Weichmacher Triethyl-2-acetylcitrat ist.

5. Ethylcellulosefolie nach einem der Ansprüche 1 bis 4, **dadurch gekennzeichnet, dass** Ethylcellulose, der mindestens eine Weichmacher und die mindestens eine Verbindung mindestens 95 Gewichtsprozent der Zusammensetzung ausmachen; der eventuelle Rest auf 100 % besteht aus mindestens einem Zusatzstoff.

6. Ethylcellulosefolie nach einem der Ansprüche 1 bis 5, **dadurch gekennzeichnet, dass** ihre Zusammensetzung, ausgedrückt in Gewichtsprozent, enthält:
- 80 % bis 90 % der genannten Ethylcellulose,
- 8 % bis 15 % des mindestens einen Weichmachers,
- 1 % bis 3 %, besonders bevorzugt 1,5 % bis 2,5 %, der mindestens einen Verbindung und
- gegebenenfalls bis zu 5 % mindestens eines Zusatzstoffes.

7. Ethylcellulosefolie nach einem der Ansprüche 1 bis 6, **dadurch gekennzeichnet, dass** ihre Zusammensetzung mindestens ein Antihaftmittel enthält; wobei das mindestens ein Antihaftmittel im Allgemeinen in einem Gewichtsanteil von 0,1 bis 0,5 % vorhanden ist.

8. Verfahren zur Herstellung einer Ethylcellulosefolie nach einem der Ansprüche 1 bis 7, **dadurch gekennzeichnet, dass** es Folgendes umfasst:
- Herstellung einer Mischung, die die Bestandteile, aus denen die Folie besteht, in angemessenen Anteilen in einem Lösungsmittel enthält,
- Formen der Mischung, gefolgt von
- Verdampfen des Lösungsmittels,
**dadurch gekennzeichnet, dass** das Lösungsmittel ein Doppellösungsmittel vom Typ Aceton/Ethanol oder vom Typ Diethylether/Ethanol, vorzugsweise vom Typ Diethylether/Ethanol, ist, wobei die beiden Komponenten des Doppellösungsmittels in den folgenden Gewichtsverhältnissen vorhanden sind: 55-70 % / 45-30 %.

9. Verfahren nach Anspruch 8, **dadurch gekennzeichnet, dass** das Doppellösungsmittel vom Typ Diethylether/Ethanol ist und dass die Mischung in drei aufeinanderfolgenden Schritten hergestellt wird:
- einen ersten Schritt des Auflösens unter Kneten der Bestandteile, aus denen die Folie besteht, mit Ausnahme des mindestens einen Weichmachers, in einem Teil des Diethylethers, der vorteilhafterweise der Hälfte der Gesamtmenge des Diethylethers entspricht,
- die Zugabe unter Kneten zur bestehenden Mischung, eines Teil Ethanol besteht, das vorteilhafterweise der Hälfte der Gesamtmenge des genannten Ethanols entspricht,
- die Zugabe unter Kneten zu der erhaltenen Mischung des Weichmachers und der komplementären Teile des genannten Diethylethers und des genannten Ethanols; vorteilhafterweise nach der Zugabe des Weichmachers die Zugabe des komplementären Teils des Ethanols, zwischen der Zugabe von zwei Mengen Diethylether, deren Summe den komplementären Teil des genannten Diethylethers bildet.

10. Doppelbasiger Treibstoffblock, bei dem ein Teil der Oberfläche mit einem Verbrennungshemmfilm beschichtet ist, **dadurch gekennzeichnet, dass** der Verbrennungshemmfilm eine Ethylcellulosefolie nach einem der Ansprüche 1 bis 7 und/oder eine Ethylcellulosefolie, der nach Anspruch 8 oder 9 hergestellt ist, ist.

11. Doppelbasiger Treibstoffblock nach Anspruch 10, **dadurch gekennzeichnet, dass** die Zusammensetzungen des doppelbasigen Treibstoffblock, aus dem der Block and das Verbrennungshemmfilm bestehen, eine oder mindestens zwei identische Verbindungen enthalten, die ausgewählt sind aus 2-Nitrodiphenylamin, 1,3-Diethyl-1,3-diphenylharnstoff, 1,3-Dimethyl-1,3-diphenylharnstoff, 1-Methyl-3-ethyl-1,3-diphenylharnstoff.

## Claims

1. Ethylcellulose film, the composition of which, expressed in percentages by weight, comprises:
- from 75% to 95% of ethylcellulose consisting of a mixture of from 40 to 60% by weight of ethylcellulose of K50 type and from 60 to 40% by weight of ethylcellulose of K100 type;
- from 4% to 20% of at least one plasticizer;
- from 0.5% to 5% of at least one compound chosen from :
+ 2-nitrodiphenylamine,
+ 1,3-diethyl-1,3-diphenyl urea,
+ 1,3-dimethyl-1,3-diphenyl urea, and
+ 1-methyl-3-ethyl-1,3-diphenyl urea; and
- optionally, up to 5% of at least one additive.

2. Ethylcellulose film according to claim 1, **characterized in that** the said at least one plasticizer is chosen from:
- triethyl 2-acetyl citrate,
- dioctyl adipate,
- dibutyl sebacate,
- isopropyl sebacate,
- n-butyl ricinoleate,
- hydrogenated methyl rosinate: CAS 8050-15-5
- triethylene glycol dicaprylate/dicaprate: CAS 68583-52-8,
- oxidised castor oil: CAS 68187-84-8.

3. Ethylcellulose film according to claim 2, **characterized in that** the said at least one plasticizer is chosen from triethyl 2-acetyl citrate, dibutyl sebacate and triethylene glycol dicaprylate/dicaprate.

4. Ethylcellulose film according to claim 2, **characterized in that** the said at least one plasticizer is triethyl 2-acetyl citrate.

5. Ethylcellulose film according to any one of claims 1 to 4, **characterized in that** ethylcellulose, the said at least one plasticizer and the said at least one compound represent at least 95% by weight of the said composition; the optional complement to 100% consisting of at least one additive.

6. Ethylcellulose film according to any one of claims 1 to 5, **characterized in that** its composition, expressed in percentages by weight, contains:
- from 80% to 90% of the said ethylcellulose,
- from 8% to 15% of the said at least one plasticizer,
- from 1% to 3%, very advantageously from 1.5% to 2.5%, of the said at least one compound, and
- optionally, up to 5% of at least one additive.

7. Ethylcellulose film according to any one of claims 1 to 6, **characterized in that** its composition contains at least one anti-adhesive agent; the said at least one anti-adhesive agent being generally present at a weight level of 0.1 to 0.5%.

8. A process for preparing an ethylcellulose film according to any one of claims 1 to 7, **characterized in that** it comprises:
- preparing a mixture containing the constituent ingredients of the said film, in suitable proportions, in a solvent,
- shaping said mixture, followed by
- evaporating said solvent,
**characterized in that** said solvent is a double solvent of the acetone/ethanol type or of the diethyl ether/ethanol type, preferably of the diethyl ether/ethanol type, the two components of said double solvent being present in the following weight ratios: 55-70%/45-30%.

9. The process according to claim 8, **characterized in that** the said double solvent is of the diethyl ether/ethanol type and **in that** said mixture is prepared in three successive steps:
- a first step of dissolving, with kneading, the constituent ingredients of the film, with the exception of the at least one plasticizer, in part of the diethyl ether, which advantageously corresponds to half the total amount of said diethyl ether,
- the addition, with kneading, to the formed mixture, of a part of ethanol, which advantageously corresponds to half the total amount of said ethanol,
- the addition, with kneading, to the mixture obtained of the plasticizer and the complementary parts of said diethyl ether and ethanol; advantageously, after the addition of the plasticizer, the addition of the complementary part of the ethanol, between the addition of two amounts of diethyl ether, the sum of which constitutes the complementary part of said diethyl ether.

10. A double-base propellant block, part of the surface of which is covered with a combustion-inhibiting film, **characterized in that** said combustion-inhibiting film is an ethylcellulose film according to any one of claims 1 to 7 and/or an ethylcellulose film prepared according to claim 8 or 9.

11. The double-base propellant block according to claim 10, **characterized in that** the compositions of the double-base propellant constituting said block and of said combustion-inhibiting film contain one or at least two identical compounds chosen from 2-nitrodiphenylamine, 1,3-diethyl-1,3-diphenyl urea, 1,3-dimethyl-1,3-diphenyl urea and 1-methyl-3-ethyl-1,3-diphenyl urea.
